# FASCICULE DE BREVET EUROPEEN

(11) **EP 3 599 146 B1**
(45) Date de publication et mention de la délivrance du brevet: **07.04.2021**
(21) Numéro de dépôt: 19186429.7
(22) Date de dépôt: 16.07.2019
(51) Int. Cl.: B62D 27/04, B62D 35/00, B62D 65/16, F16B 5/10, F16B 21/04

(54) **CROCHET DE CONNEXION POUR BECQUET**
ANSCHLUSSHAKEN FÜR SPOILER
CONNECTION HOOK FOR SPOILER

(30) Priorité: 27.07.2018 FR 1856997
(43) Date de publication de la demande: 29.01.2020
(73) Titulaire: NOVARES France, 92140 Clamart (FR)
(72) Inventeur: HUGUET, Guillaume, 01250 NIVIGNE ET SURAN (FR); COMBE, Philippe, 01100 GEOVREISSET (FR)
(74) Mandataire: Delorme, Nicolas

(56) Documents cités:
- EP-A1- 2 805 876
- CN-A- 101 438 065
- DE-A1-102013 006 720
- DE-C1- 3 803 136
- FR-A1- 2 764 350

## Description

La présente invention concerne un ensemble formé par l'assemblage de deux pièces, en particulier de carrosserie, d'un véhicule automobile.

Les carrosseries automobiles sont de plus en plus réalisées par l'assemblage de plusieurs pièces d'aspect sur la caisse structurelle.

La réalisation en plusieurs pièces est souvent obligatoire pour des raisons de faisabilité technique, d'assemblage ou de transport. Ce mode de réalisation présente toutefois l'inconvénient de créer des jeux et des désaffleurs entre pièces qui ont un impact négatif sur l'aspect esthétique du véhicule. Le document DE 10 2013 006720 A1 divulgue un élément d'assemblage de deux pièces de véhicule automobile.

En particulier, dans le cas d'un becquet, réalisé en deux parties et destiné à se fixer sur la structure d'un hayon, des contraintes supplémentaires de continuité de style, que ce soit en terme de couleur ou de galbes par exemple, imposent de réduire au maximum la valeur des jeux et des affleurements entre les deux parties.

Les solutions actuelles pour assembler les deux parties du becquet utilisent des clipsages et/ou des vissages qui ne permettent pas de réduire les jeux et affleurements.

En effet, la fixation définitive du becquet sur le hayon, opérée par vissage, intervient sur des pièces pré-assemblées et clipsées. Or, ces clipsages ne génèrent pas suffisamment de contrainte pour déformer les pièces constitutives du becquet et réduire les jeux et affleurements. Ainsi, lorsque le becquet est vissé sur le hayon, les pièces ne sont pas plaquées correctement l'une sur l'autre. L'aspect extérieur du becquet en est donc impacté de manière importante.

La présente invention vise donc à fournir un ensemble formé par l'assemblage de deux pièces d'un véhicule automobile, permettant de réduire la valeur des jeux et affleurements entre les deux pièces.

A cet effet, l'invention propose un ensemble formé par l'assemblage de deux pièces, en particulier de carrosserie, d'un véhicule automobile comprenant :
- une première pièce ;
- une deuxième pièce, lesdites première et deuxième pièces étant assemblées par clipsage ou encliquetage ;
- un élément de verrouillage destiné à empêcher tout déplacement relatif entre les première et deuxième pièces, ledit élément de verrouillage pouvant se déplacer en rotation autour d'un axe sous l'action de moyens de manœuvre entre une position déverrouillée, dans laquelle un déplacement relatif entre les première et deuxième pièces est possible, et une position verrouillée, dans laquelle il empêche tout déplacement relatif entre les première et deuxième pièces,
caractérisé par le fait que l'élément de verrouillage comprend :
- un corps sensiblement cylindrique centré sur l'axe, ledit corps étant partiellement logé à l'intérieur d'une cavité en arc de cercle formée dans une partie plane de la deuxième pièce, ladite partie plane étant alignée dans un plan perpendiculaire à l'axe;
- une paire d'ailettes de retenue, chacune des ailettes de retenue comprenant un bord supérieur s'étendant radialement depuis une surface périphérique dudit corps et un bord latéral s'étendant coaxialement à ladite surface périphérique, chacune des ailettes de retenue formant avec le corps une rainure annulaire configurée de telle sorte que, dans la position verrouillée de l'élément de verrouillage, elle permet de loger au moins partiellement un élément de retenue de l'une des première et deuxième pièces, ledit élément de retenue possédant au moins partiellement un profil sensiblement complémentaire à celui de ladite rainure annulaire, et que, dans la position déverrouillée de l'élément de verrouillage, ledit élément de retenue est disposé en dehors de ladite rainure annulaire; et
par le fait que au moins l'une des première et deuxième pièces comprend un élément de butée configuré de telle sorte que, dans la position verrouillée de l'élément de verrouillage, il empêche tout déplacement axial de l'élément de verrouillage relativement aux première et deuxième pièces.

Ainsi configuré, l'ensemble de l'invention permet de réaliser un assemblage isostatique de deux pièces d'un véhicule automobile au moyen de l'élément de verrouillage qui vient plaquer les deux pièces l'une sur l'autre lorsqu'il est dans sa position verrouillée. En particulier, les ailettes de retenue de l'élément de verrouillage vont interagir avec les éléments de retenue de chacune des pièces de manière à empêcher tout déplacement relatif entre les deux pièces dans un plan dans lequel elles sont globalement alignées et l'élément de butée va interagir avec l'élément de verrouillage de manière à empêcher tout déplacement relatif entre les deux pièces selon une direction perpendiculaire audit plan.

Selon d'autres modes de réalisation, l'invention comporte l'une ou plusieurs des caractéristiques suivantes :
- le corps de l'élément de verrouillage est muni d'un étranglement à l'intérieur duquel vient se loger au moins partiellement un bord concave de la deuxième pièce qui entoure la cavité en arc de cercle, ledit corps reposant sur ledit bord concave dans la position verrouillée de l'élément de verrouillage.
- l'élément de retenue de la deuxième pièce comprend une surface de butée contre laquelle vient buter l'une des ailettes de retenue lorsque l'élément de verrouillage est dans sa position verrouillée.
- la partie plane de la deuxième pièce comporte une découpe délimitant une zone flexible comprenant une excroissance sur une de ses faces, ladite zone flexible pouvant se déplacer par flexion entre deux positions extrêmes, à savoir une position non fléchie, dans laquelle ladite excroissance est reçue à l'intérieur d'une encoche formée le long du bord latéral de l'une des ailettes de retenue, empêchant ainsi le déplacement de l'élément de verrouillage de sa position déverrouillée à sa position verrouillée, et une position fléchie, dans laquelle ladite excroissance est disposée en dehors de ladite encoche, permettant ainsi le déplacement de l'élément de verrouillage de sa position déverrouillée à sa position verrouillée.
- les moyens de manœuvre comprennent une empreinte hexagonale en creux formée dans l'une des surfaces planes bordant le corps de l'élément de verrouillage, ladite empreinte hexagonale pouvant coopérer avec une clé mâle six pans pour permettre le déplacement en rotation de l'élément de verrouillage.
- le corps de l'élément de verrouillage est muni d'un trou taraudé, ledit trou taraudé pouvant coopérer avec une vis pour permettre de fixer l'ensemble sur une troisième pièce du véhicule automobile.
- le trou taraudé possède un point dur apte à générer un couple résistant lors de l'opération de vissage, ledit couple résistant étant suffisant pour momentanément empêcher la progression axiale de la vis à l'intérieur du trou taraudé, le couple appliqué sur la vis par l'utilisateur étant alors transféré au moins partiellement à l'élément de verrouillage, de telle sorte qu'il permet le déplacement de l'élément de verrouillage de sa position déverrouillée à sa position verrouillée.
- le corps comprend une première partie solidaire des ailettes de retenue et une deuxième partie disposée au moins partiellement à l'intérieur de la première partie et pouvant glisser le long de coulisses solidaires de la première partie, le trou taraudé étant formé dans la deuxième partie.
- la deuxième partie comprend un segment central décrivant sensiblement un cylindre de révolution coaxialement au trou taraudé et reliant deux têtes d'extrémité aplaties disposées perpendiculairement à l'axe du corps, ledit segment central étant reçu à l'intérieur d'une ouverture traversante de forme oblongue formée à l'intérieur de la première partie, et chacune des têtes d'extrémité étant configurée pour s'ajuster à l'intérieur d'une creusure formée sur une face d'extrémité de la première partie de telle sorte qu'elle puisse coulisser à l'intérieur de ladite creusure.
- l'élément de butée est constitué par une nervure formée le long d'un bord de la première pièce faisant face à la partie plane de la deuxième pièce, ladite nervure décrivant sensiblement un arc de cercle autour de l'axe de rotation de l'élément de verrouillage et étant disposée de manière à déborder au moins partiellement au-dessus du bord supérieur de l'une des ailettes de retenue dans la position verrouillée de l'élément de verrouillage, ledit bord supérieur et ladite nervure étant alors en contact l'un avec l'autre.
- L'ensemble forme un becquet destiné à être fixé sur un hayon d'un véhicule automobile.

L'invention concerne également un véhicule automobile équipé de l'ensemble précité.

L'invention sera mieux comprise à la lecture de la description qui va suivre, donnée uniquement à titre d'exemple, et faite en se référant aux dessins annexés, sur lesquels :
- la figure 1 est une vue partielle de l'arrière d'un véhicule automobile équipé d'un becquet arrière, ledit becquet étant monté sur le hayon du véhicule ;
- la figure 2 est une vue similaire à la figure 1, dans laquelle ont été uniquement représentés le becquet et le cadre du hayon sur lequel il est monté, certains ajours permettant de visualiser des éléments non visibles de l'ensemble ;
- la figure 3 est une vue en coupe transversale, agrandie de la zone A représentée sur la figure 2, permettant de visualiser le mode d'assemblage des deux pièces principales de ce becquet ;
- la figure 4 est une vue agrandie de la zone B représentée sur la figure 2, dans laquelle ont été uniquement représentés l'élément de verrouillage permettant de verrouiller en position les deux pièces principales de ce becquet et la pièce principale sur laquelle il est monté au départ ;
- la figure 5 est une vue similaire à la figure 4, mais l'élément de verrouillage et la pièce principale étant séparés l'un de l'autre ;
- les figures 6a, 6b et 6c sont des vues de dessus de la zone A représentée sur la figure 2, dans plusieurs positions successives de l'élément de verrouillage durant son transfert entre sa position déverrouillée à sa position verrouillée ;
- la figure 7 est une vue en coupe transversale selon la ligne de coupe CC' du becquet représenté sur la figure 6c ;
- la figure 8 est une vue de dessus en perspective de l'élément de verrouillage représenté sur la figure 5 ;
- la figure 9 est une vue de dessous en perspective de l'élément de verrouillage représenté sur la figure 8 ;
- la figure 10 est une vue éclatée en perspective de l'élément de verrouillage représenté sur la figure 8.

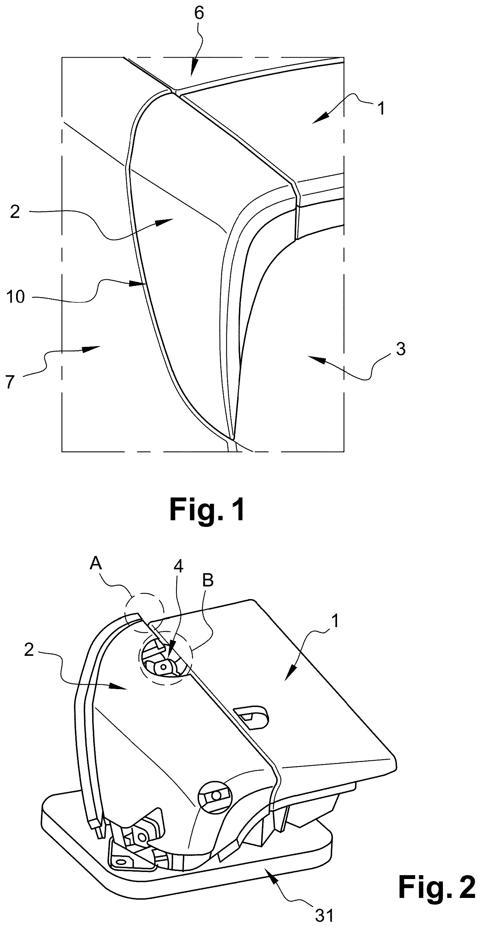

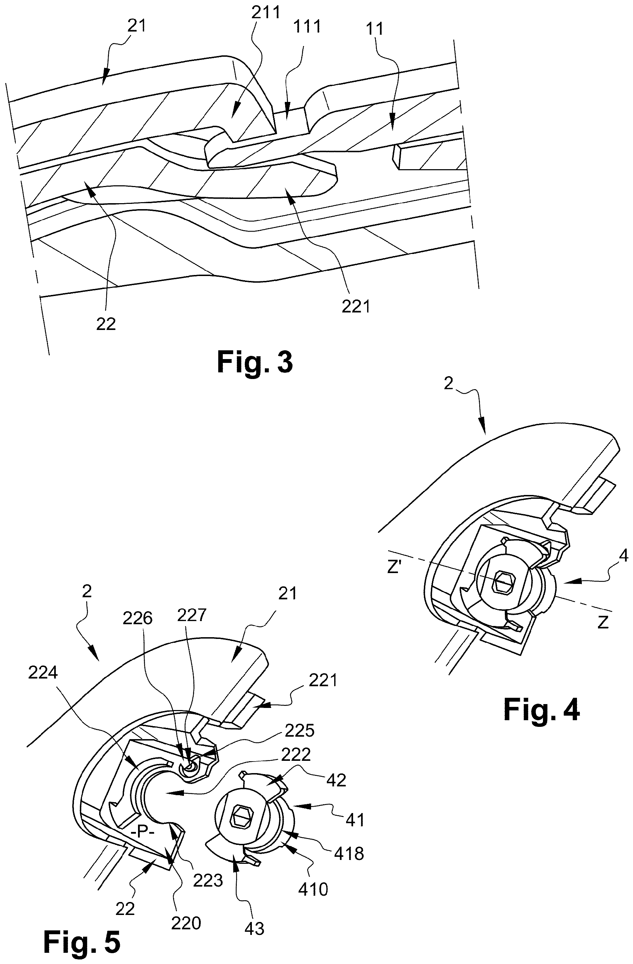

La figure 1 représente un hayon 3 d'un véhicule équipé d'une lunette arrière sur lequel est fixé un becquet 10 conforme à l'invention. Le becquet 10 est formé notamment d'une première pièce principale 1 s'étendant parallèlement au toit 6 du véhicule et d'une deuxième pièce principale 2 s'étendant en partie le long d'un des côtés 7 du véhicule. Les deux pièces principales 1 et 2 présentent un aspect extérieur, que ce soit en terme de couleur et de galbe, sensiblement homogène et continu. L'aspect extérieur du becquet 10 est encore renforcé par le fait que les pièces 1 et 2 sont sensiblement jointives, aucun désaffleur ou décalage entre les deux pièces 1 et 2 n'apparaissant de manière visible. Cette absence de désaffleur peut toutefois, dans le cas d'un becquet selon l'art antérieur, ne pas être assurée de manière systématique du fait du principe d'assemblage des pièces 1 et 2 sur le hayon 3. En particulier, avant d'être fixé au moyen de vis sur le hayon 3, le becquet 10 est généralement préassemblé par clipsage ou encliquetage des pièces 1 et 2 ensemble. Un tel mode de préassemblage est notamment représenté sur la figure 3. Dans l'exemple représenté, un segment supérieur 11 de la première pièce principale 1 vient s'encliqueter entre deux segments 21 et 22 de la deuxième pièce principale 2, l'extrémité 211 du segment 21 et l'extrémité 221 du segment 22 formant une sorte de pince enserrant une extrémité 111 du segment 11. Ce préassemblage présente toutefois le désavantage de créer un certain jeu entre les pièces principales 1 et 2, l'extrémité 111 n'étant pas solidement maintenue entre les extrémités 211 et 221.

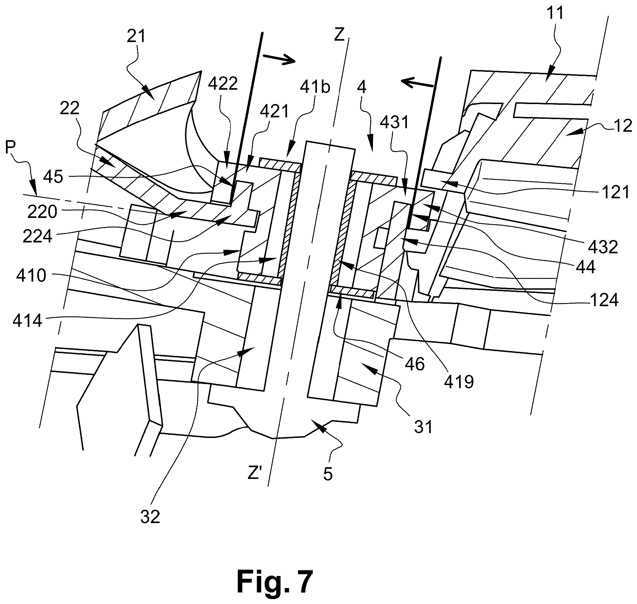

Comme représenté sur la figure 2, le becquet 10 de la présente invention conserve ce mode de préassemblage par encliquetage ou clipsage des pièces principales 1 et 2, mais en prévoyant un élément de verrouillage 4 additionnel, ledit élément de verrouillage 4 étant destiné à empêcher tout déplacement relatif entre les pièces principales 1 et 2 lorsque il est dans une position spécifique, comme expliqué en détail dans les paragraphes qui suivent. Le becquet 10 ainsi préassemblé est ensuite fixé au moyen d'au moins une vis 5 sur un cadre 31 du hayon 3 (voir figure 7). Cette vis 5 permet par ailleurs de fixer l'élément de verrouillage 4 dans la position spécifique susmentionnée, ce qui diminue encore le risque d'un jeu éventuel entre les pièces principales 1 et 2 en cours d'usage.

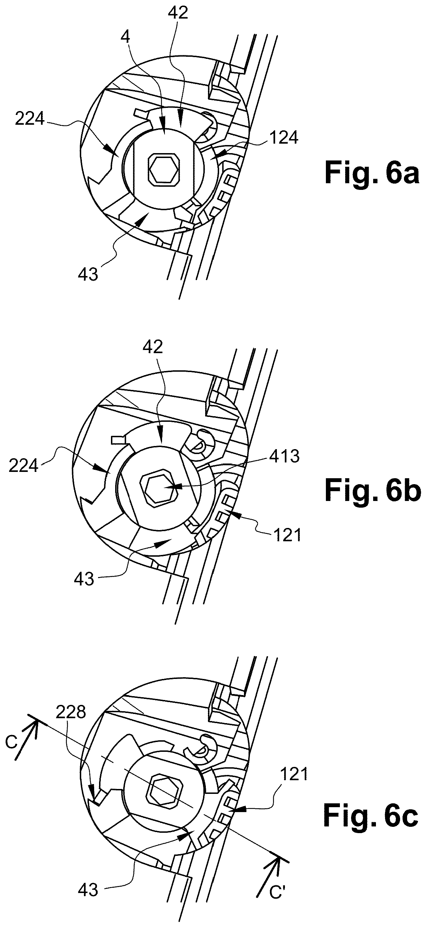

Comme représenté sur les figures 4 et 5, l'élément de verrouillage 4 vient se positionner à la jonction entre les pièces principales 1 et 2 de telle sorte qu'il puisse pivoter autour d'un axe ZZ' entre une position déverrouillée, ou inactive, représentée sur les figures 4 et 6a, dans laquelle il ne permet pas encore d'empêcher un déplacement relatif entre les première et deuxième pièces 1 et 2, et une position verrouillée, ou active, représentée sur la figure 6c, dans laquelle tout déplacement relatif entre les pièces principales 1 et 2 est empêché.

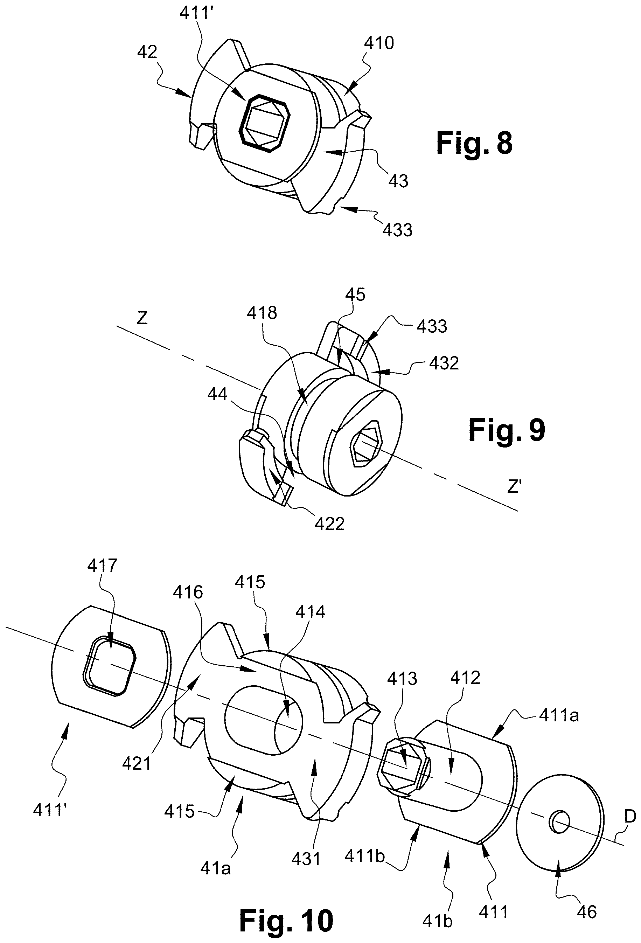

En référence aux figures 8 à 10, il est représenté en détail la structure de l'élément de verrouillage 4. En particulier, l'élément de verrouillage 4 comprend un corps 41 sensiblement cylindrique centré sur l'axe ZZ', et une paire d'ailettes de retenue 42, 43. Le corps 41 est formé d'une première partie 41a, qui est solidaire des ailettes de retenue 42, 43, et d'une deuxième partie 41b, qui est disposée au moins partiellement à l'intérieur de la première partie 41a de telle sorte à pouvoir se déplacer par rapport à ladite première partie 41a le long d'une direction D lorsque l'élément de verrouillage 4 n'est pas encore fixé sur le cadre 31 du hayon 3. Ce déplacement relatif entre les première et deuxième parties 41a et 41b permettra en particulier de régler la position d'un trou taraudé 419 formé à travers la deuxième partie 41b, et destiné à recevoir la vis 5 fixant l'élément de verrouillage 4 sur le cadre 31 du hayon (voir figure 7). Il sera ainsi possible de compenser les effets de dilatation thermique pouvant se produire en cours d'utilisation, lesquels pourraient entraîner un non-alignement entre le trou taraudé 419 et un trou correspondant formé à travers le cadre 31, ce qui empêcherait au final la fixation de l'élément de verrouillage 4 sur le cadre 31. En particulier, la deuxième partie 41b comprend un segment central 412 décrivant sensiblement un cylindre de révolution coaxialement au trou taraudé 419 et reliant deux têtes d'extrémité 411 et 411' aplaties disposées perpendiculairement à l'axe ZZ'. Le segment central 412 est reçu à l'intérieur d'une ouverture traversante 414 de forme oblongue formée à l'intérieur de la première partie 41a de telle sorte qu'il puisse se déplacer le long de la direction D. Chacune des têtes d'extrémité 411 et 411' est délimitée par deux bords 411a et 411b parallèles à la direction D, lesdits bords étant configurés pour s'ajuster à l'intérieur d'une creusure 416 formée sur une face d'extrémité 415 de la première partie 41a de telle sorte que chacune des têtes d'extrémité 411, 411' peut coulisser à l'intérieur de la creusure 416 le long de la direction D. Le segment central 412 est avantageusement muni d'une cavité traversante 413 de forme hexagonale, ladite cavité 413 étant sensiblement alignée avec le trou taraudé 419 et débouchant de chaque côté au niveau d'une ouverture centrale 417 formée dans chacune des surfaces planes 411, 411'. Ladite cavité 413 définit ainsi pour le corps 41 une zone en creux, ou empreinte, de forme hexagonale, à l'intérieur de laquelle peut être introduit une clé mâle six pans de manière à permettre le déplacement en rotation de l'élément de verrouillage 4. Dans une variante de réalisation de l'invention (non représentée), il sera envisageable de ne pas prévoir de cavité traversante 413. Dans cette variante, le déplacement en rotation de l'élément de verrouillage 4 s'effectue au moyen de la vis 5. A cet effet, le trou taraudé 419 possèdera avantageusement un point dur, à savoir une zone plus étroite ou une zone à coefficient de friction plus important, susceptible de générer un couple résistant lors de l'opération de vissage. Le couple résistant devra en particulier être suffisant pour momentanément empêcher la progression axiale de la vis 5 à l'intérieur du trou taraudé 419, le couple appliqué sur la vis 5 par l'utilisateur étant alors transféré au moins partiellement à l'élément de verrouillage 4, de telle sorte qu'il permettra le déplacement de l'élément de verrouillage 4 de sa position déverrouillée à sa position verrouillée.

En ce qui concerne la première partie 41a du corps 41, elle est formée d'une partie cylindrique à l'extrémité 415 de laquelle dépasse radialement les ailettes de retenue 42 et 43. Chacune des ailettes de retenue 42, 43 comprend respectivement un bord supérieur 421, 431 s'étendant radialement depuis une surface périphérique 410 du corps 41 et un bord latéral 422, 432 s'étendant coaxialement à ladite surface périphérique 410. Un étranglement 418 est formé le long de la surface périphérique 410, ledit étranglement 418 étant configuré pour loger au moins partiellement un bord concave 223 de la deuxième pièce principale 2 qui entoure une cavité 222 en arc de cercle (voir figure 5). Le bord 223 est formé dans une partie 220 de la pièce 2 qui est alignée dans un plan P perpendiculaire à l'axe ZZ'. Comme illustré sur la figure 7, le corps 41 repose sur le bord 223 dans la position verrouillée de l'élément de verrouillage 4. Chacune des ailettes de retenue 42, 43 forme respectivement avec le corps 41 une rainure annulaire 44, 45 qui est respectivement alignée avec un élément de retenue 124, 224 de la première, respectivement deuxième, pièce 1, 2, ledit élément de retenue 124, respectivement 224, possédant au moins partiellement un profil sensiblement complémentaire à celui de ladite rainure annulaire 44, respectivement 45. En particulier, l'élément de retenue 124 est formé par une nervure décrivant un arc de cercle autour de l'axe ZZ' et l'élément de retenue 224 forme une zone en relief à la surface de la partie plane 220 (voir figure 5 et 6a). Par ailleurs, comme illustré sur la figure 9, le bord latéral 432 de l'ailette de retenue 43 est muni d'une encoche 433, dont la fonction sera précisée par la suite.

En référence aux figures 6a à 6c, il est représenté plusieurs positions successives de l'élément de verrouillage 4 lors de son déplacement entre sa position déverrouillée et sa position verrouillée.

Dans la position représentée sur la figure 6a, l'élément de verrouillage 4 est dans sa position déverrouillée. Dans cette position, l'élément de retenue 124, respectivement 224, est disposé en dehors de la rainure 44, respectivement 45. La première pièce principale 1 peut donc librement se déplacer par rapport à la deuxième pièce principale 2 et réciproquement, dans des limites bien entendu imposées par le jeu relatif entre ces deux pièces. Cette position pourra avantageusement constituer une position initiale de préassemblage entre les deux pièces principales 1 et 2. De ce fait, de manière à éviter que l'élément de verrouillage 4 ne vienne se positionner de manière prématurée dans sa position verrouillée, ce qui pourrait gêner le préassemblage des deux pièces 1 et 2, il est avantageusement prévu des moyens de blocage/ libération destinés à bloquer, respectivement à libérer, l'élément de verrouillage 4 dans sa position déverrouillée. Comme illustré sur la figure 5, ces moyens de blocage/libération comprennent une découpe 225 formée dans la partie plane 220 de la deuxième pièce principale 2, ladite découpe 225 délimitant une zone flexible 226, qui est apte à se déplacer par flexion entre deux positions extrêmes, à savoir une position non fléchie, dans laquelle une excroissance 227 dépassant de la zone flexible 226 est reçue à l'intérieur de l'encoche 433 de l'ailette de retenue 43, bloquant ainsi l'élément de verrouillage 4 dans sa position déverrouillée, et une position fléchie, dans laquelle ladite excroissance 227 est disposée en dehors de ladite encoche 433, libérant ainsi l'élément de verrouillage 4 de sa position déverrouillée.

Dans la position représentée sur la figure 6b, l'élément de verrouillage 4 a été libéré de sa position déverrouillée et a été déplacé en rotation au moyen d'une clé à six pans introduite dans la cavité hexagonale 413. L'élément de retenue 124, respectivement 224, est venu partiellement se loger à l'intérieur de la rainure annulaire 44, respectivement 45. Par ailleurs, l'ailette de retenue 43 est venue partiellement se loger sous une nervure 121 formée le long d'un bord de la première pièce principale 1 qui fait face à la partie plane 220 de la deuxième pièce principale 2, ladite nervure 121 décrivant sensiblement un arc de cercle autour de l'axe de rotation ZZ' et étant disposée de manière à déborder au moins partiellement au-dessus du bord supérieur 431 de ladite ailette de retenue 43 (voir figure 7). Dans cette position intermédiaire, les pièces principales 1 et 2 sont encore libres de se déplacer l'une par rapport à l'autre.

Dans la position représentée sur la figure 6c, l'élément de verrouillage 4 a été déplacé en rotation depuis la position représentée sur la figure 6b, jusqu'à ce que l'ailette de retenue 42 bute contre une surface de butée 228 de l'élément de retenue 224. L'élément de retenue 124, respectivement 224, est ainsi venu presque complètement se loger à l'intérieur de la rainure annulaire 44, respectivement 45. Du fait des formes respectives des rainures 44 et 45, lesquelles ont appuyé respectivement contre les éléments de retenue 124 et 224, il s'est produit un rapprochement des deux pièces principales 1 et 2 (comme indiqué sur la figure 7). Par ailleurs, l'ailette de retenue 43 est venue presque complétement se loger sous la nervure 121, le bord supérieur 431 de l'ailette de retenue 43 et la nervure 121 étant alors en contact ou quasiment en contact l'un avec l'autre. Dans cette position verrouillée de l'élément de verrouillage 4, les pièces principales 1 et 2 ne sont donc plus libres de se déplacer l'une par rapport à l'autre. L'utilisateur peut donc procéder à la fixation du becquet 10 sur le hayon 3, en introduisant la vis 5 à l'intérieur d'un trou 32 du cadre 31, la tête de la vis 5 reposant sur ledit cadre 31, en appliquant le becquet 10 ainsi préassemblé contre le cadre 31, le trou taraudé 419 étant aligné avec le trou 32, et en serrant la vis 5 dans le trou taraudé 419, en ayant au préalable disposé un joint annulaire 46 autour de la vis 5, entre le becquet 10 et le cadre 31. Il est à noter que, dans ce mode de fixation, la vis 5 est cachée par le becquet 10. Elle n'est donc pas visible de l'extérieur lorsque le hayon 3 est fermé. Le serrage ou desserrage de la vis 5 se fera donc de l'intérieur du véhicule, en ayant ouvert au préalable le hayon 3.

Bien entendu, l'invention ne se limite pas à la forme d'exécution décrite ci-dessus. Il sera ainsi envisageable d'étendre son application à tout ensemble formé par l'assemblage de deux pièces, en particulier de carrosserie, d'un véhicule automobile, pour lequel la problématique des ajours entre pièces se pose.

## Revendications

1. Ensemble (10) formé par l'assemblage de deux pièces (1, 2), en particulier de carrosserie, d'un véhicule automobile comprenant :
- une première pièce (1);
- une deuxième pièce (2), lesdites première et deuxième pièces (1, 2) étant assemblées par clipsage ou encliquetage;
- un élément de verrouillage (4) destiné à empêcher tout déplacement relatif entre les première et deuxième pièces (1, 2), ledit élément de verrouillage (4) pouvant se déplacer en rotation autour d'un axe (ZZ') sous l'action de moyens de manœuvre (413) entre une position déverrouillée, dans laquelle un déplacement relatif entre les première et deuxième pièces (1, 2) est possible, et une position verrouillée, dans laquelle il empêche tout déplacement relatif entre les première et deuxième pièces (1, 2),
**caractérisé en ce que** l'élément de verrouillage (4) comprend :
- un corps (41) sensiblement cylindrique centré sur l'axe (ZZ'), ledit corps (41) étant partiellement logé à l'intérieur d'une cavité (222) en arc de cercle formée dans une partie plane (220) de la deuxième pièce (2), ladite partie plane (220) étant alignée dans un plan (P) perpendiculaire à l'axe (ZZ');
- une paire d'ailettes de retenue (42, 43), chacune des ailettes de retenue (42, 43) comprenant un bord supérieur (421, 431) s'étendant radialement depuis une surface périphérique (410) dudit corps (41) et un bord latéral (422, 432) s'étendant coaxialement à ladite surface périphérique (410), une des ailettes de retenue (43) formant avec le corps (41) une rainure annulaire (44) configurée de telle sorte que, dans la position verrouillée de l'élément de verrouillage (4), elle permet de loger au moins partiellement un élément de retenue (124) de la première pièce (1) et une autre des ailettes de retenue (42) formant avec le corps (41) une rainure annulaire (45) configurée de telle sorte que, dans la position verrouillée de l'élément de verrouillage (4), elle permet de loger au moins partiellement un élément de retenue (224) de la deuxième pièce (2), lesdits éléments de retenue (124, 224) possédant au moins partiellement un profil sensiblement complémentaire à celui desdites rainures annulaires (44, 45), et que, dans la position déverrouillée de l'élément de verrouillage (4), lesdits éléments de retenue (124, 224) sont disposés en dehors desdites rainures annulaires (44, 45); et
**en ce que** au moins l'une des première et deuxième pièces (1, 2) comprend un élément de butée (121) configuré de telle sorte que, dans la position verrouillée de l'élément de verrouillage (4), il empêche tout déplacement axial de l'élément de verrouillage (4) relativement aux première et deuxième pièces (1, 2).

2. Ensemble (10) selon la revendication 1, **caractérisé en ce que** le corps (41) de l'élément de verrouillage (4) est muni d'un étranglement (418) à l'intérieur duquel vient se loger au moins partiellement un bord concave (223) de la deuxième pièce (2) qui entoure la cavité (222) en arc de cercle, ledit corps (41) reposant sur ledit bord concave (223) dans la position verrouillée de l'élément de verrouillage (4).

3. Ensemble (10) selon l'une quelconque des revendications précédentes, **caractérisé en ce que** l'élément de retenue (224) de la deuxième pièce (2) comprend une surface de butée (228) contre laquelle vient buter l'une des ailettes de retenue (42) lorsque l'élément de verrouillage (4) est dans sa position verrouillée.

4. Ensemble (10) selon l'une quelconque des revendications précédentes, **caractérisé en ce que** la partie plane (220) de la deuxième pièce (2) comporte une découpe (225) délimitant une zone flexible (226) comprenant une excroissance (227) sur une de ses faces, ladite zone flexible (226) pouvant se déplacer par flexion entre deux positions extrêmes, à savoir une position non fléchie, dans laquelle ladite excroissance (227) est reçue à l'intérieur d'une encoche (433) formée le long du bord latéral (432) de l'une des ailettes de retenue (43), empêchant ainsi le déplacement de l'élément de verrouillage (4) de sa position déverrouillée à sa position verrouillée, et une position fléchie, dans laquelle ladite excroissance (227) est disposée en dehors de ladite encoche (433), permettant ainsi le déplacement de l'élément de verrouillage (4) de sa position déverrouillée à sa position verrouillée.

5. Ensemble (10) selon l'une quelconque des revendications précédentes, **caractérisé en ce que** les moyens de manœuvre comprennent une empreinte hexagonale (413) en creux formée dans l'une des surfaces planes (411, 411') bordant le corps (41) de l'élément de verrouillage (4), ladite empreinte hexagonale (413) pouvant coopérer avec une clé mâle six pans pour permettre le déplacement en rotation de l'élément de verrouillage (4).

6. Ensemble (10) selon l'une quelconque des revendications précédentes, **caractérisé en ce que** le corps (41) de l'élément de verrouillage (4) est muni d'un trou taraudé (419), ledit trou taraudé (419) pouvant coopérer avec une vis (5) pour permettre de fixer l'ensemble (10) sur une troisième pièce (3) du véhicule automobile.

7. Ensemble (10) selon la revendication 6, **caractérisé en ce que** le trou taraudé (419) possède un point dur apte à générer un couple résistant lors de l'opération de vissage, ledit couple résistant étant suffisant pour momentanément empêcher la progression axiale de la vis (5) à l'intérieur du trou taraudé (419), le couple appliqué sur la vis (5) par l'utilisateur étant alors transféré au moins partiellement à l'élément de verrouillage (4), de telle sorte qu'il permet le déplacement de l'élément de verrouillage (4) de sa position déverrouillée à sa position verrouillée.

8. Ensemble (10) selon l'une quelconque des revendications 6 et 7, **caractérisé en ce que** le corps (41) comprend une première partie (41a) solidaire des ailettes de retenue (42, 43) et une deuxième partie (41b) disposée au moins partiellement à l'intérieur de la première partie (41a) et pouvant glisser le long de coulisses (415) solidaires de la première partie (41a), le trou taraudé (419) étant formé dans la deuxième partie (41b).

9. Ensemble (10) selon la revendication précédente, **caractérisé en ce que** la deuxième partie (41b) comprend un segment central (412) décrivant sensiblement un cylindre de révolution coaxialement au trou taraudé (419) et reliant deux têtes d'extrémité (411, 411') aplaties disposées perpendiculairement à l'axe (ZZ') du corps (41), ledit segment central (412) étant reçu à l'intérieur d'une ouverture traversante (414) de forme oblongue formée à l'intérieur de la première partie (41a), et chacune des têtes d'extrémité (411, 411') étant configurée pour s'ajuster à l'intérieur d'une creusure (416) formée sur une face d'extrémité (415) de la première partie (41a) de telle sorte qu'elle puisse coulisser à l'intérieur de ladite creusure (416).

10. Ensemble (10) selon l'une quelconque des revendications précédentes, **caractérisé en ce que** l'élément de butée est constitué par une nervure (121) formée le long d'un bord de la première pièce (1) faisant face à la partie plane (220) de la deuxième pièce (2), ladite nervure (121) décrivant sensiblement un arc de cercle autour de l'axe de rotation (ZZ') de l'élément de verrouillage (4) et étant disposée de manière à déborder au moins partiellement au-dessus du bord supérieur (431) de l'une des ailettes de retenue (43) dans la position verrouillée de l'élément de verrouillage (4), ledit bord supérieur (431) et ladite nervure (121) étant alors en contact l'un avec l'autre.

11. Ensemble (10) selon l'une quelconque des revendications précédentes, **caractérisé en ce qu'**il forme un becquet (10) destiné à être fixé sur un hayon (3) d'un véhicule automobile.

12. Véhicule automobile équipé d'un ensemble (10) selon l'une quelconque des revendications précédentes.

## Patentansprüche

1. Einheit (10), die gebildet wird durch Zusammenfügen von zwei Teilen (1, 2), insbesondere eines Fahrzeugaufbaus, eines Kraftfahrzeugs, umfassend:
- ein erstes Teil (1) ;
- ein zweites Teil (2), wobei das erste und zweite Teil (1, 2) durch Einklipsen oder Einrasten zusammengefügt werden;
- ein Verriegelungselement (4), das dazu bestimmt ist, jegliche relative Bewegung zwischen dem ersten und zweiten Teil (1, 2) zu verhindern, wobei sich das Verriegelungselement (4) drehend um eine Achse (ZZ') unter der Wirkung von Betätigungsmitteln (413) zwischen einer entriegelten Position, in der eine relative Bewegung zwischen dem ersten und zweiten Teil (1, 2) möglich ist, und einer verriegelten Position, in der es jegliche relative Bewegung zwischen dem ersten und zweiten Teil (1, 2) verhindert, bewegen kann,
**dadurch gekennzeichnet, dass** das Verriegelungselement (4) umfasst:
- einen im Wesentlichen zylindrischen Körper (41), der auf der Achse (ZZ') zentriert ist, wobei der Körper (41) teilweise innerhalb einer Aushöhlung (222) in Kreisbogenform aufgenommen ist, die in einem ebenen Abschnitt (220) des zweiten Teils (2) gebildet ist, wobei der ebene Abschnitt (220) in einer Ebene (P) senkrecht zu der Achse (ZZ') ausgerichtet ist;
- ein Paar Halteflügel (42, 43), wobei jeder der Halteflügel (42, 43) einen oberen Rand (421, 431) umfasst, der sich radial ausgehend von einer umlaufenden Oberfläche (410) des Körpers (41) erstreckt, und einen seitlichen Rand (422, 432), der sich koaxial zu der umlaufenden Oberfläche (410) erstreckt, wobei einer der Halteflügel (43) mit dem Körper (41) eine ringförmige Rille (44) bildet, die so ausgestaltet ist, dass sie, in der verriegelten Position des Verriegelungselements (4), es ermöglicht, mindestens teilweise ein Halteelement (124) des ersten Teils (1) aufzunehmen, und ein anderer der Halteflügel (42) mit dem Körper (41) eine ringförmige Rille (45) bildet, die so ausgestaltet ist, dass sie, in der verriegelten Position des Verriegelungselements (4), es ermöglicht, mindestens teilweise ein Haltelement (224) des zweiten Teils (2) aufzunehmen, wobei die Halteelemente (124, 224) mindestens teilweise ein Profil besitzen, das im Wesentlichen komplementär ist zu jenem der ringförmigen Rillen (44, 45), und dass, in der entriegelten Position des Verriegelungselements (4), die Halteelemente (124, 224) außerhalb der ringförmigen Rillen (44, 45) angeordnet sind; und
dadurch, dass mindestens eines des ersten und zweiten Teils (1, 2) ein Anschlagelement (121) umfasst, das so ausgestaltet ist, dass es, in der verriegelten Position des Verriegelungselements (4), jegliche axiale Bewegung des Verriegelungselements (4) in Bezug auf das erste und zweite Teil (1, 2) verhindert.

2. Einheit (10) nach Anspruch 1, **dadurch gekennzeichnet, dass** der Körper (41) des Verriegelungselements (4) mit einer Verengung (418) versehen ist, innerhalb derer mindestens teilweise ein konkaver Rand (223) des zweiten Teils (2) aufgenommen wird, der die Aushöhlung (222) in Kreisbogenform umgibt, wobei der Körper (41) auf dem konkaven Rand (223) in der verriegelten Position des Verriegelungselements (4) aufliegt.

3. Einheit (10) nach einem der vorstehenden Ansprüche, **dadurch gekennzeichnet, dass** das Halteelement (224) des zweiten Teils (2) eine Anschlagoberfläche (228) umfasst, gegen die einer der Halteflügel (42) anschlägt, wenn sich das Verriegelungselement (4) in seiner verriegelten Position befindet.

4. Einheit (10) nach einem der vorstehenden Ansprüche, **dadurch gekennzeichnet, dass** der ebene Abschnitt (220) des zweiten Teils (2) einen Ausschnitt (225) umfasst, der eine flexible Zone (226) begrenzt, die einen Vorsprung (227) auf einer ihrer Flächen umfasst, wobei sich die flexible Zone (226) durch Biegung zwischen zwei Endpositionen bewegen kann, nämlich einer nicht gebogenen Position, in der der Vorsprung (227) innerhalb einer Einkerbung (433) aufgenommen ist, die entlang des seitlichen Rands (432) des einen der Halteflügel (43) gebildet ist, wodurch die Bewegung des Verriegelungselements (4) von seiner entriegelten Position in seine verriegelte Position somit verhindert wird, und einer gebogenen Position, in der der Vorsprung (227) außerhalb der Einkerbung (433) angeordnet ist, wodurch die Bewegung des Verriegelungselements (4) von seiner entriegelten Position in seine verriegelte Position somit ermöglicht wird.

5. Einheit (10) nach einem der vorstehenden Ansprüche, **dadurch gekennzeichnet, dass** die Betätigungsmittel eine hohle Sechskantvertiefung (413) umfassen, die in einer der ebenen Oberflächen (411, 411') gebildet ist, die den Körper (41) des Verriegelungselements (4) säumen, wobei die Sechskantvertiefung (413) mit einem Sechskantschlüssel zusammenwirken kann, um die Drehbewegung des Verriegelungselements (4) zu ermöglichen.

6. Einheit (10) nach einem der vorstehenden Ansprüche, **dadurch gekennzeichnet, dass** der Körper (41) des Verriegelungselements (4) mit einer Gewindebohrung (419) versehen ist, wobei die Gewindebohrung (419) mit einer Schraube (5) zusammenwirken kann, um zu ermöglichen, dass die Einheit (10) auf einem dritten Teil (3) des Kraftfahrzeugs fixiert wird.

7. Einheit (10) nach Anspruch 6, **dadurch gekennzeichnet, dass** die Gewindebohrung (419) einen Druckpunkt besitzt, der geeignet ist, ein Widerstandsmoment beim Schraubvorgang zu erzeugen, wobei das Widerstandsmoment ausreichend ist, um den axialen Fortschritt der Schraube (5) innerhalb der Gewindebohrung (419) vorübergehend zu verhindern, wobei das von dem Benutzer auf die Schraube (5) angewandte Moment dann mindestens teilweise auf das Verriegelungselement (4) übertragen wird, sodass es die Bewegung des Verriegelungselements (4) von seiner entriegelten Position in seine verriegelte Position ermöglicht.

8. Einheit (10) nach einem der Ansprüche 6 und 7, **dadurch gekennzeichnet, dass** der Körper (41) einen ersten Abschnitt (41a) umfasst, der fest mit den Halteflügeln (42, 43) verbunden ist, und einen zweiten Abschnitt (41b), der mindestens teilweise innerhalb des ersten Abschnitts (41a) angeordnet ist und entlang von Führungen (415) gleiten kann, die fest mit dem ersten Abschnitt (41a) verbunden sind, wobei die Gewindebohrung (419) in dem zweiten Abschnitt (41b) gebildet ist.

9. Einheit (10) nach dem vorstehenden Anspruch, **dadurch gekennzeichnet, dass** der zweite Abschnitt (41b) ein Mittelsegment (412) umfasst, das im Wesentlichen einen Drehzylinder beschreibt, der zu der Gewindebohrung (419) koaxial ist und zwei abgeflachte Endköpfe (411, 411') verbindet, die senkrecht zu der Achse (ZZ') des Körpers (41) angeordnet sind, wobei das Mittelsegment (412) innerhalb einer Durchgangsöffnung (414) länglicher Form aufgenommen ist, die innerhalb des ersten Abschnitts (41a) gebildet ist, und wobei jeder der Endköpfe (411, 411') ausgestaltet ist, sich innerhalb einer Einsenkung (416) anzupassen, die auf einer Endfläche (415) des ersten Abschnitts (41a) gebildet ist, sodass er innerhalb der Einsenkung (416) gleiten kann.

10. Einheit (10) nach einem der vorstehenden Ansprüche, **dadurch gekennzeichnet, dass** das Anschlagelement von einer Rippe (121) gebildet wird, die entlang eines Rands des ersten Teils (1) gebildet ist, der dem ebenen Abschnitt (220) des zweiten Teils (2) gegenüberliegt, wobei die Rippe (121) im Wesentlichen einen Kreisbogen um die Drehachse (ZZ') des Verriegelungselements (4) beschreibt und so angeordnet ist, dass sie mindestens teilweise über den oberen Rand (431) des einen der Halteflügel (43) in der verriegelten Position des Verriegelungselements (4) hinausragt, wobei der obere Rand (431) und die Rippe (121) dann in Kontakt miteinander sind.

11. Einheit (10) nach einem der vorstehenden Ansprüche, **dadurch gekennzeichnet, dass** sie einen Spoiler (10) bildet, der dazu bestimmt ist, auf einer Heckklappe (3) eines Kraftfahrzeugs fixiert zu werden.

12. Kraftfahrzeug, das mit einer Einheit (10) nach einem der vorstehenden Ansprüche ausgestattet ist.

## Claims

1. Assembly (10) formed by assembling two parts (1, 2), in particular of a bodywork, of a motor vehicle comprising:
- a first part (1);
- a second part (2), said first and second parts (1, 2) being assembled by clipping or snap-fitting;
- a locking element (4) intended to prevent any relative displacement between the first and second parts (1, 2), said locking element (4) being able to be displaced in rotation about an axis (ZZ') under the action of maneuvering means (413) between an unlocked position, in which a relative displacement between the first and second parts (1, 2) is possible, and a locked position, in which it prevents any relative displacement between the first and second parts (1, 2),
**characterized in that** the locking element (4) comprises:
- a substantially cylindrical body (41) which is centered on the axis (ZZ'), said body (41) being partially housed inside a circular arc shaped cavity (222) formed in a planar portion (220) of the second part (2), said planar portion (220) being aligned in a plane (P) which is perpendicular to the axis (ZZ');
- a pair of retaining fins (42, 43), each of the retaining fins (42, 43) comprising an upper edge (421, 431) extending radially from a peripheral surface (410) of said body (41) and a lateral edge (422, 432) extending coaxially to said peripheral surface (410), one of the retaining fins (43) forming with the body (41) an annular groove (44) configured such that, in the locked position of the locking element (4), it allows housing at least partially a retaining element (124) of the first part (1) and another of the retaining fins (42) forming, with the body (41), an annular groove (45) which is configured such that, in the locked position of the locking element (4), it allows housing at least partially a retaining element (224) of the second part (2), said retaining elements (124, 224) having at least partially a profile which is substantially complementary to that of said annular grooves (44, 45), and that, in the unlocked position of the locking element (4), said retaining elements (124, 224) are disposed outside said annular grooves (44, 45); and
**in that** at least one of the first and second parts (1, 2) comprises a stop element (121) which is configured such that, in the locked position of the locking element (4), it prevents any axial displacement of the locking element (4) relative to the first and second parts (1, 2).

2. Assembly (10) according to claim 1, **characterized in that** the body (41) of the locking element (4) is provided with a throttle (418) inside which at least partially a concave edge (223) of the second part (2), which surrounds the circular arc shaped cavity (222), is housed, said body (41) resting on said concave edge (223) in the locked position of the locking element (4).

3. Assembly (10) according to any one of the preceding claims, **characterized in that** the retaining element (224) of the second part (2) comprises a stop surface (228) against which one of the retaining fins (42) abuts when the locking element (4) is in its locked position.

4. Assembly (10) according to any one of the preceding claims, **characterized in that** the planar portion (220) of the second part (2) includes a cutout (225) delimiting a flexible area (226) comprising a protuberance (227) on one of the faces thereof, said flexible area (226) being able to be displaced by bending between two extreme positions, namely an unflexed position, in which said protuberance (227) is received inside a notch (433) formed along the lateral edge (432) of one of the retaining fins (43), thus preventing the displacement of the locking member (4) from its unlocked position to its locked position, and a flexed position, in which said protuberance (227) is disposed outside said notch (433), thus allowing the displacement of the locking element (4) from its unlocked position to its locked position.

5. Assembly (10) according to any one of the preceding claims, **characterized in that** the maneuvering means comprise a hexagonal hollow imprint (413) which is formed in one of the planar surfaces (411, 411') bordering the body (41) of the locking element (4), said hexagonal imprint (413) being able to cooperate with an Allen key to allow the rotational displacement of the locking element (4).

6. Assembly (10) according to any one of the preceding claims, **characterized in that** the body (41) of the locking element (4) is provided with a threaded hole (419), said threaded hole (419) being able to cooperate with a screw (5) to allow fastening the assembly (10) on a third part (3) of the motor vehicle.

7. Assembly (10) according to claim 6, **characterized in that** the threaded hole (419) has a hard point capable of generating a resisting torque during the screwing operation, said resisting torque being sufficient to momentarily prevent the axial advance of the screw (5) inside the threaded hole (419), the torque applied to the screw (5) by the user then being transferred at least partially to the locking element (4), such that it allows the displacement of the locking element (4) from its unlocked position to its locked position.

8. Assembly (10) according to any one of claims 6 and 7, **characterized in that** the body (41) comprises a first portion (41a) secured to the retaining fins (42, 43) and a second portion (41b) disposed at least partially inside the first portion (41a) and being able to slide along slides (415) which are secured to the first portion (41a), the threaded hole (419) being formed in the second portion (41b).

9. Assembly (10) according to the preceding claim, **characterized in that** the second portion (41b) comprises a central segment (412) substantially describing a cylinder of revolution coaxially to the threaded hole (419) and connecting two flattened end heads (411, 411') disposed perpendicular to the axis (ZZ') of the body (41), said central segment (412) being received inside an oblong-shaped through opening (414) formed inside the first portion (41a), and each of the end heads (411, 411') being configured to be adjusted inside a recess (416) formed on an end face (415) of the first portion (41a) such that it can slide inside said recess (416).

10. Assembly (10) according to any one of the preceding claims, **characterized in that** the stop element consists of a rib (121) formed along an edge of the first part (1) facing the planar portion (220) of the second part (2), said rib (121) substantially describing an arc of a circle about the axis of rotation (ZZ') of the locking element (4) and being disposed so as to project at least partially above the upper edge (431) of one of the retaining fins (43) in the locked position of the locking member (4), said upper edge (431) and said rib (121) then being in contact with each other.

11. Assembly (10) according to any one of the preceding claims, **characterized in that** it forms a spoiler (10) intended to be fastened on a tailgate (3) of a motor vehicle.

12. A motor vehicle equipped with an assembly (10) according to any one of the preceding claims.
